# EUROPEAN PATENT APPLICATION

(11) **EP 1 533 047 A2**
(43) Date of publication of application: **25.05.2005**
(21) Application number: 04396078.0
(22) Date of filing: 16.11.2004
(51) Int. Cl.: B08B 3/02, B29C 71/00

(54) **Method for fining products and fining equipment**

(30) Priority: 17.11.2003 FI 20031667
(71) Applicant: Elektrobit Automation Oy, 70461 Kuopio (FI)
(72) Inventor: Helminen, Jari, 70780 Kuopio (FI); Hätinen, Mika, 70820 Kuopio (FI); Tervo, Kari, 70780 Kuopio (FI)
(74) Representative: Pitkänen, Hannu Alpo Antero

(57) **Abstract**

The present invention relates to a method for fining plastic or similar products cast in a mold, and, especially, for fining foil shred appearing on the edges of the product. Products to be fined are placed on a conveyor (7) transporting the products through the various stages of cleaning; the products are then transferred to the fining device (1) and fined using high-pressure fluid from a pressure-cleaning device, following which the products are dried in a drying device (3, 4). In the method according to the invention the products are transferred from the fining device to a rinsing device (2) for rinsing, then the products are transferred to a drying device (3, 4), where excess moisture is removed in the blasting drying machine (3) and residual moisture is evaporated through warm-air drying in the next drying device (4). The invention also comprises an equipment for applying the method.

## Description

The invention relates to a method for fining plastic products cast in a mold, and especially, for fining foil shreds appearing on the edges of the product, products to be fined are placed on a conveyor transferring the products through the various stages of fining; the products are then transferred to the fining device and fined using pressurized fluid from a pressure-cleaning device, following which the products are dried in a drying device. The invention also relates to a fining equipment for applying the method, which includes a cleaning device for fining the products using pressure-cleaning spray jets, a drying machine for drying the product and a conveyor for transporting the product through the various stages of fining.

When manufacturing plastic products cast in a mold, or products manufactured using similar materials, the edges of the product and/or the edges of cavities in the product are left with foil shred that distorts the product's designed shape. Casting in this context is used to indicate not only casting as such but also injection molding or other manufacturing method for plastic or similar products, in which the above-mentioned foil shred appears or may appear in plastic or similar products. Foil shred may be caused by either the IMD (In-Mold Decoration) technique used for decorating the products, or by the casting material overflowing into the crack between the two halves of the mold. In many cases, another problem is dust and dirt sticking to the products following casting.

Cleaning the foil shred from the products has previously taken place using the following methods: a. Scratching manually with a tool, e.g. a knife; b. Wiping by hand using a cotton glove; c. Brushing with a toothbrush or similar brush; d. Using pressurized air to blow away the foil shred; e. Pressure-cleaning with fluid.

Generally speaking, it can be said that the quality of manual cleaning varies depending on the employee, activity level and skill. In addition, there is a risk of scratching the product when cleaning with a tool. The fining result and capacity may be poor for a number of reasons. The work is mind numbing and monotonous. Foil shred removed when dry gets stuck on the surfaces of the product, since the loosened shreds and the products are subject to static electricity, and dirty and clean products are processed close to each other. Additionally, loosened foil shred is light and floats easily with the airflow, touching both the cleaned products and the injection molding molds, leaving marks. For this reason, the production has to be rejected. The problem with using pressure cleaning and fluids is water spots, which must not remain visible on the final product.

It could be said that the manufacture of products requiring special fining is unprofitable due to the large number of employees needed for mass production. Another problem is that the large number of employees needed for fining causes a financial risk as production amounts vary depending on the market situation.

The object of the invention is to provide a fining method and equipment by which the disadvantages connected to current methods and equipment can be removed. In particularly, the object of the invention is to provide a fining method and a equipment by which foil shred formed on the edges/in the cavities of plastic or similar products can be removed in such a way that no water spots remain visible, and by which the product can be cleaned reliably and quickly of dust and dirt. Another object of the invention is to provide fining method and equipment that will not harm the product, and equipment that is automatic and easy to use.

The object of the invention is achieved through the fining method and the fining equipment, the characteristics of which have been presented in the claims.

According to the invention the products are transferred from the fining device to a rinsing device for rinsing, then transferring the product to a drying device and removing excess water in the blast drying machine, and evaporating residual humidity through warm air drying in the next drying device. Using the method, foil shred located in the products, product edges and/or cavities, as well as dust and dirt, are removed through pressure cleaning. Drying takes place in separate stages and in such a way as to avoid water spots forming on the surfaces of the product. The fluid used will most often be water, or water-based solutions applied for various objects, but it is also possible to use other fluids - such as various water-based solutions (detergents) and other fluids.

The method introduces various new benefits. Through using the method, the fining process is always consistent, automatic and continuous, and the quality of the fining is improving. Dirty and clean products are processed separately, keeping clean products protected from foil shred coming off dirty products. Loosened foil shred gets tied to fluids such as water and is not left floating in the air in the workspace. The risk of harm being caused to the products is reduced. The profitability of manufacturing products requiring fining is improved due to the large capacity of the cleaning devices and the smaller number of employees needed. Additionally, the financial risk is reduced, as the number of employees grows smaller in the midst of changing production needs.

In an advantageous application of the method according to the invention, products are cleaned in the fining device with the help of direct pressure-spray jets, and products are dried with the help of direct pressure-air heating. With the help of direct spray jets, the pressurized fluid can be precisely directed at the desired spots. Product manufacture is aware of the sections in which the foil shred usually remains. This knowledge can be taken into account in fining various products, and the spray jets can be directed at the right spots. The drying process also takes the various parts of the product into account, with heating directed specifically at sections where water spots or other marks may form. The pressure-spray jets are "aimed" - in other words, they can be oriented and targeted at foil shred to be removed or sections to be dried from different directions, which is essential for good fining and drying results. Orientation is a feature of the system and equipment, which, when used, ensures sufficient jet spray aiming.

In the following advantageous application of the method according to the invention, the products are dried in warm space by automatic heating and evaporation. Products can be efficiently dried in the warm air facility.

The fining equipment according to the invention includes a rinsing device for rinsing products, and the drying device includes a blast-drying machine for removing excess water and a warm-air drying device for evaporating excess moisture. With the help of the drying device, products can be dried efficiently and immediately, leaving no trace on the products. The equipment is relatively simple in structure and reliable in operation.

In the invention equipment, pressure spray jet devices can be aimed in the desired direction in an affordable manner. With the help of aimed jet sprays, the pressure cleaning can be directed at specific spots, and thus products of various sizes can be cleaned efficiently.

Additionally, the drying equipment of the invention includes pressure air nozzles that can be affordably aimed in various directions.

In the following, the invention is explained in greater detail by referring to the enclosed drawing, where
Figure 1 shows an application of a fining equipment according to the invention presented from a slanting angle from above, and
Figure 2 presents the parts of the fining equipment in a chart, and
Figure 3 presents the operating chart for the pressure-cleaning device.

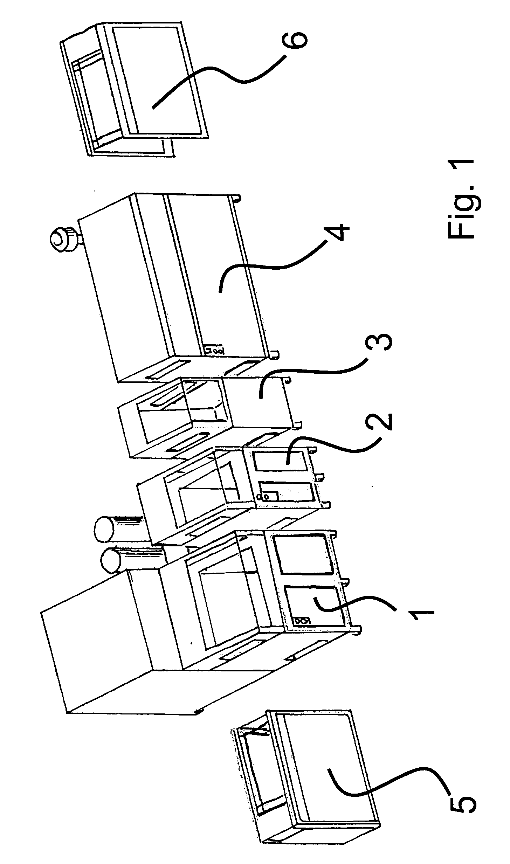

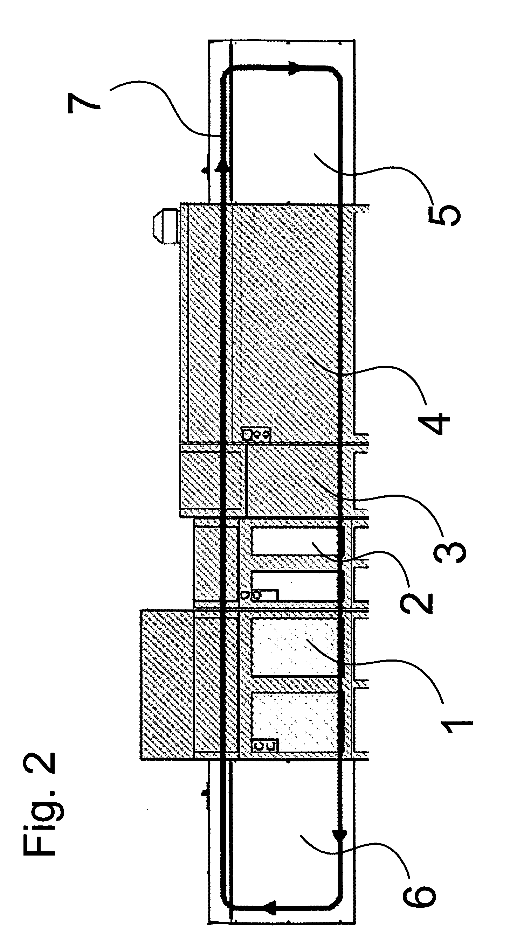

In the application presented in Figures 1 and 2, the fining equipment includes a fining device 1, a rinsing device 2 and drying devices 3 and 4. Additionally, the fining equipment includes a loading device 5 placed in front of the fining device, as well as a unloading device 6 located after the latter drying device. The fining equipment also includes a conveyor 7 presented as a basic drawing in Figure 2, through which products can be transported at different stages of fining. The conveyor in Figure 2 is known as a so-called continuous conveyor or belt, arranged to circulate through the various devices of the equipment and transfer the attached product from the loading device to the cleaning device, the rinsing device and the drying device through to the unloading device. The conveyor includes, or can be equipped with, clamps or similar devices in order to attach the products. The various modules of the drying device shown in Figure 1 have been presented as separate devices, with a certain distance between them, for the sake of clarity. In reality the devices are next to each other, as indicated in Figure 2.

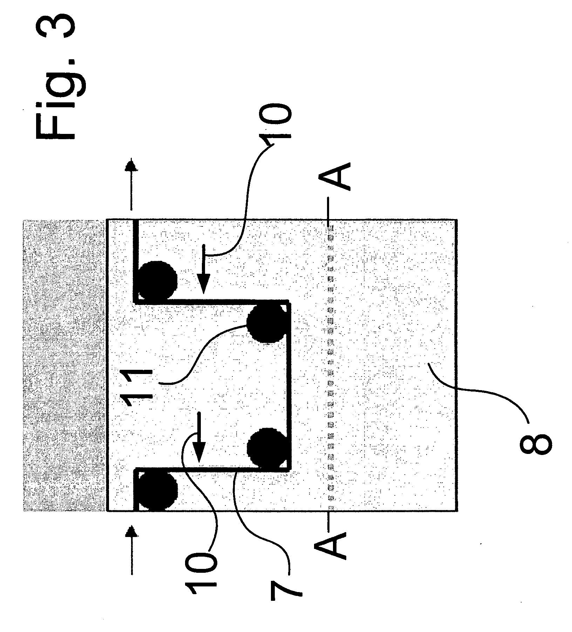

The cleaning device 1 is. a pressure-cleaning device where the products are cleaned. Figure 3 presents the fluid container 8 for the pressure-cleaning device, to which the conveyor 7 has been arranged to run with the help of the supports 9. In the fluid container 8, the surface of the fluid is at a certain level A, which is lower than the lowest point of the conveyor. The fluid container comprises the directed pressure spray jets 10, which have been aimed at the conveyor and can be adjusted as desired. The conveyor and products contained within it have been led in from one side of the fluid container of the cleaning device, and the conveyor has been supported and guided with the help of the supports 11 and led out from the other side.

The rinsing device 2 is a device equipped with a rinsing spray jet or similar device. The equipment displayed in Figure 1 has two drying devices used for drying wet products after cleaning them. The first drying device 3 is a through drying machine, and the second drying device 4 is a heat-drying device.

When using the displayed fining equipment, the fining process comprises the following stages:
Products to be cleaned are placed on the conveyor 7 in the loading device 5, attached as desired, and transferred by the conveyor to the cleaning device in section 1. In the cleaning device, products are cleaned in the fluid container using the pressure spray jet 10. Following that, the products are transferred to the rinsing device 2, where they are rinsed with separate, clean water from the pressure-cleaning device. In the drying device 3, to which the products are moved next, excess water from the surface of the products is removed with the help of a pressurized air jet spray that can be aimed. Moisture remaining on the product surfaces following drying will be removed through warm-air drying in the next drying device 4. Finally, the cleaned products are removed from the conveyor in the unloading device 6 in the manner prescribed. On the whole, the equipment functions automatically and the different stages and measures are performed automatically, resulting in cleaning taking place quickly without any delays.

In another of the invention's cleaning devices, pressure cleaning and drying are completed as batch processing without a conveyor. In the third device application, no separate rinsing will be used. Additionally, it is possible to use different drying techniques and devices for various applications. The drying process can comprise only drying, evaporation or conventional drying.

The invention is not limited to the applications presented in the figures and described above; alterations and applications for the invention are possible within the framework of the invention idea defined by claims.

## Claims

1. A method for fining plastic or similar products cast in a mold, especially fining the foil shred on the edges of the product, where the products to be fined are placed on a conveyor (7) by which the products are transferred at different stages of fining, the products are transferred to the fining device (1) and cleaned with pressurized fluid from a pressure-cleaning device (10), following which the products are cleaned in a drying device (3, 4), ***characterized* in that** the products are transferred from the cleaning device to a rinsing device (2) and rinsed in the rinsing device, then transferred to the drying device (3, 4), where excess water is removed in the blasting drying machine (3) and excess moisture is evaporated through warm-air drying in the next drying device (4).

2. A method according to claim 1, ***characterized* in that** the products are cleaned in a cleaning device (1) with the help of directed pressurized jet sprays (10) and the products are dried with the help of directed pressurized air drying.

3. A method according to claim 1 or 2, ***characterized* in that** the products are dried in a warm-air facility (4) using automatic heating and evaporation.

4. A cleaning equipment for fining products cast in a mold, and especially, for fining the foil shred appearing on the edges of the product, the cleaning equipment includes a cleaning device (1) for fining products with a pressurized cleaning-jet spray, a drying device (3, 4) for drying the products and a conveyor (7) for transporting the products at different stages of cleaning, ***characterized* in that** the cleaning equipment includes a rinsing device (2) for rinsing the products, and the drying device (3, 4) includes a drying device (3) for removing excess water and a drying device (4) for evaporating excess moisture through warm-air drying.

5. A cleaning equipment according to claim 4, ***characterized* in that** the pressurized spray jet devices (10) in the cleaning device can be aimed.

6. A cleaning equipment according to claim 4, ***characterized* in that** the pressurized spray-jet devices in the drying device (3) are equipped with turnable, pressurized air nozzles.
